# EUROPEAN PATENT APPLICATION

(11) **EP 4 254 995 A1**
(43) Date of publication of application: **04.10.2023**
(21) Application number: 22165171.4
(22) Date of filing: 29.03.2022
(51) Int. Cl.: H04W 4/06

(54) **METHOD, APPARATUS AND COMPUTER PROGRAM**

(71) Applicant: Nokia Technologies Oy, 02610 Espoo (FI)
(72) Inventor: LANDAIS, Bruno, 22560 Pleumeur-Bodou (FR); BELLING, Horst Thomas, 85435 Erding (DE); GODIN, Philippe, 78000 Versailles (FR); NASSAR, Mohamed Amin, 81477 Munich (DE)
(74) Representative: Page White Farrer

(57) **Abstract**

There is provided an apparatus comprising broadcasting, in a first cell, an indication of an activity status of a multicast/broadcast service session, wherein the activity status of the multicast/broadcast service session is determined per multicast/broadcast service area, and wherein the indication is broadcast in one or more cells including the first cell associated with the service area.

## Description

### FIELD

The present application relates to a method, apparatus, and computer program and in particular but not exclusively to configuring a multicast/broadcast service session per multicast/broadcast service area.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to an aspect, there is provided an apparatus comprising means for: broadcasting, in a first cell, an indication of an activity status of a multicast/broadcast service session, wherein the activity status of the multicast/broadcast service session is determined per multicast/broadcast service area, and wherein the indication is broadcast in one or more cells including the first cell associated with the service area.

The means may be further for: broadcasting a multicast/broadcast service identifier or a multicast/broadcast frequency selection area identifier together with the indication of the activity status of the multicast/broadcast service session

The indication of the activity status of a multicast/broadcast service session may be one of: an identifier of the multicast/broadcast session which is periodically broadcasted while the multicast/broadcast service session is active in the multicast/broadcast service area; or a paging message for the multicast/broadcast session which is periodically broadcasted while the multicast/broadcast service session is active in the multicast/broadcast service area.

The apparatus may further comprise means for broadcasting the activity status of a multicast/broadcast service session in all cells served by the apparatus that belong to at least one service area of the multicast/broadcast session.

The apparatus may further comprise means for: sending, in the first cell data, of the multicast/broadcast service for the service area to which the first cell belongs while the multicast/broadcast service is active in the service area; and determining that at least one user equipment that wants to receive the multicast/broadcast session is located in the first cell.

The apparatus may further comprise means for: receiving an indication that at least one user equipment has joined the multicast/broadcast service session; receiving, from a user equipment that joined the multicast session, a request for transiting to RRC-Connected state from an inactive or idle state in response to the broadcasted information; and determining, based on the request, that a user equipment wanting to receive multicast/broadcast session is located in the first cell.

The request for transiting to RRC-Connected state may comprise an indication that the request is for receiving multicast data, wherein the determining is based on the indication that the request is for receiving multicast data.

The apparatus may further comprise means for: receiving a preamble for the multicast session in response to broadcasted information; and determining, based on the preamble, that at least one user equipment in the cell wants to receive the multicast/broadcast service session traffic.

Determining whether the multicast/broadcast service session is active in a service area with which the first cell is associated may comprise receiving one or more of: a group paging message for the multicast/broadcast session with a corresponding service area; a multicast/broadcast session activation request for the multicast/broadcast session with a corresponding service area; an XnAP RAN Multicast Group paging request for the multicast session with a corresponding service area; a distribution setup response message for the multicast/broadcast session with a corresponding service area; and a next generation application protocol protocol data unit session resource setup or modify request requesting to establish resources for the multicast/broadcast session with a corresponding service area.

The apparatus may further comprise means for: sending, to a multicast broadcast session management function and in response to the determining that at least one user equipment that wants to receive the multicast/broadcast session is located in the cell, a request for establishment of multicast multicast/broadcast service session traffic delivery to the apparatus.

The apparatus may further comprise means for: determining whether a user equipment that joined a multicast/broadcast session with multiple service areas is capable of receiving the indication of an activity status of a multicast/broadcast service session; and when determining that the user equipment is not capable of receiving the indication, keeping the user equipment in RRC-connected state while the multicast/broadcast session exists.

According to an aspect, there is provided an apparatus comprising means for: receiving, from an access node associated with a first cell, an indication of an activity status of a multicast/broadcast service session in the first cell, wherein the indication is broadcast in one or more cells including the first cell; determining whether the multicast/broadcast service session is active in the first cell based on the indication; and in response to determining that the multicast/broadcast service session is active in the first cell, if not yet receiving data for the multicast session in the first cell, starting to receive data for the multicast session in the first cell.

The means may be further for: receiving a multicast/broadcast service identifier or a multicast/broadcast frequency selection area identifier and the indication of the activity status of the multicast/broadcast service session.

The indication of the activity status of a multicast/broadcast service session may comprise one of: an identifier of the multicast/broadcast session which is periodically broadcasted while the multicast/broadcast service session is active in the multicast/broadcast service area; or a paging message for the multicast/broadcast session which is periodically broadcasted while the multicast/broadcast service session is active in the multicast/broadcast service area.

The means may be further for: sending a request to transition to RRC-active state and a service request in response to being in RRC_inactive or RRC_idle state and determining that the multicast/broadcast service session is active.

The service request may comprise an indication that it is for receiving multicast data.

The request to transition to RRC-active state may comprise an indication that the request is for receiving multicast data.

The means may be further for: sending a preamble for the multicast session in response to being in RRC_inactive state; and determining that the multicast/broadcast service session is active.

The means may be further for: sending a request to transition to RRC-active state and a service request in response to being in RRC_inactive or RRC_idle state; camping in a cell within the service area of the multicast/broadcast session; and not receiving the indication of the activity status of a multicast/broadcast service session in that cell for a configured period.

The apparatus may be moving to the first cell from a second cell, wherein the second cell may be one of: a cell that is not part of a service area of the multicast/broadcast session; or a cell that is part of a service area of a multicast/broadcast session and where the multicast/broadcast session is inactive.

According to an aspect, there is provided an apparatus comprising means for: receiving, from a multicast/broadcast session management function, information indicating that a multicast/broadcast service session is active in one service area, wherein the multicast/broadcast service session is configured per multicast/broadcast service area; and configuring one or more access nodes to broadcast an indication of an activity status of the multicast/broadcast service session.

The one or more access nodes may be selected as at least one of: being all the access nodes serving the service area; or as all access nodes having an established shared N3 tunnel for the multicast/broadcast session.

The apparatus may comprise means for: receiving a service request, wherein the service request comprises an indication that the service request is for receiving multicast data; and deciding whether to accept the service request or to reject the service request based on the received indication and a condition of the apparatus.

According to an aspect, there is provided an apparatus comprising at least one processor and at least one memory including a computer program code, the at least one memory and computer program code configured to, with the at least one processor, cause the apparatus at least to: broadcast, in a first cell, an indication of an activity status of a multicast/broadcast service session, wherein the activity status of the multicast/broadcast service session is determined per multicast/broadcast service area, and wherein the indication is broadcast in one or more cells including the first cell associated with the service area.

The at least one memory and at least one processor may be configured to cause the apparatus to broadcast a multicast/broadcast service identifier or a multicast/broadcast frequency selection area identifier together with the indication of the activity status of the multicast/broadcast service session

The indication of the activity status of a multicast/broadcast service session may be one of: an identifier of the multicast/broadcast session which is periodically broadcasted while the multicast/broadcast service session is active in the multicast/broadcast service area; or a paging message for the multicast/broadcast session which is periodically broadcasted while the multicast/broadcast service session is active in the multicast/broadcast service area.

The at least one memory and at least one processor may be configured to cause the apparatus to broadcast the activity status of a multicast/broadcast service session in all cells served by the apparatus that belong to at least one service area of the multicast/broadcast session.

The at least one memory and at least one processor may be configured to cause the apparatus to send, in the first cell data, of the multicast/broadcast service for the service area to which the first cell belongs while the multicast/broadcast service is active in the service area; and determine that at least one user equipment that wants to receive the multicast/broadcast session is located in the first cell.

The at least one memory and at least one processor may be configured to cause the apparatus to: receive an indication that at least one user equipment has joined the multicast/broadcast service session; receive, from a user equipment that joined the multicast session, a request for transiting to RRC-Connected state from an inactive or idle state in response to the broadcasted information; and determine, based on the request, that a user equipment wanting to receive multicast/broadcast session is located in the first cell.

The request for transiting to RRC-Connected state may comprise an indication that the request is for receiving multicast data, wherein the at least one memory and at least one processor may be configured to cause the apparatus to determine that the user equipment wanting to receive the multicast/broadcast session is located in the first cell based on the indication that the request is for receiving multicast data.

The at least one memory and at least one processor may be configured to cause the apparatus to: receive a preamble for the multicast session in response to broadcasted information; and determine, based on the preamble, that at least one user equipment in the cell wants to receive the multicast/broadcast service session traffic.

The at least one memory and at least one processor may be configured to cause the apparatus to determining whether the multicast/broadcast service session is active in the service area with which the first cell is associated by receiving one or more of: a group paging message for the multicast/broadcast session with a corresponding service area; a multicast/broadcast session activation request for the multicast/broadcast session with a corresponding service area; an XnAP RAN Multicast Group paging request for the multicast session with a corresponding service area; a distribution setup response message for the multicast/broadcast session with a corresponding service area; and a next generation application protocol protocol data unit session resource setup or modify request requesting to establish resources for the multicast/broadcast session with a corresponding service area.

The at least one memory and at least one processor may be configured to cause the apparatus to: send, to a multicast broadcast session management function and in response to determining that at least one user equipment that wants to receive the multicast/broadcast session is located in the cell, a request for establishment of multicast multicast/broadcast service session traffic delivery to the apparatus.

The at least one memory and at least one processor may be configured to cause the apparatus to: determine whether a user equipment that joined a multicast/broadcast session with multiple service areas is capable of receiving the indication of an activity status of a multicast/broadcast service session; and when determining that the user equipment is not capable of receiving the indication, keep the user equipment in RRC-connected state while the multicast/broadcast session exists.

According to an aspect, there is provided an apparatus comprising at least one processor and at least one memory including a computer program code, the at least one memory and computer program code configured to, with the at least one processor, cause the apparatus at least to: receive, from an access node associated with a first cell, an indication of an activity status of a multicast/broadcast service session in the first cell, wherein the indication is broadcast in one or more cells including the first cell; determine whether the multicast/broadcast service session is active in the first cell based on the indication; and in response to determining that the multicast/broadcast service session is active in the first cell, if not yet receiving data for the multicast session in the first cell, start to receive data for the multicast session in the first cell.

The at least one memory and at least one processor may be configured to cause the apparatus to: receive a multicast/broadcast service identifier or a multicast/broadcast frequency selection area identifier and the indication of the activity status of the multicast/broadcast service session.

The indication of the activity status of a multicast/broadcast service session may comprise one of: an identifier of the multicast/broadcast session which is periodically broadcasted while the multicast/broadcast service session is active in the multicast/broadcast service area; or a paging message for the multicast/broadcast session which is periodically broadcasted while the multicast/broadcast service session is active in the multicast/broadcast service area.

The at least one memory and at least one processor may be configured to cause the apparatus to: send a request to transition to RRC-active state and a service request in response to being in RRC_inactive or RRC_idle state and determing that the multicast/broadcast service session is active.

The service request may comprise an indication that it is for receiving multicast data.

The request to transition to RRC-active state may comprise an indication that the request is for receiving multicast data.

The at least one memory and at least one processor may be configured to cause the apparatus to: send a preamble for the multicast session in response to being in RRC_inactive state and determining that the multicast/broadcast service session is active.

The at least one memory and at least one processor may be configured to cause the apparatus to: send a request to transition to RRC-active state and a service request in response to being in RRC_inactive or RRC_idle state; camp in a cell within the service area of the multicast/broadcast session; and not receive the indication of the activity status of a multicast/broadcast service session in that cell for a configured period.

The apparatus may be moving to the first cell from a second cell, wherein the second cell may be one of: a cell that is not part of a service area of the multicast/broadcast session; or a cell that is part of a service area of a multicast/broadcast session and where the multicast/broadcast session is inactive.

According to an aspect, there is provided an apparatus comprising at least one processor and at least one memory including a computer program code, the at least one memory and computer program code configured to, with the at least one processor, cause the apparatus at least to: receive, from a multicast/broadcast session management function, information indicating that a multicast/broadcast service session is active in one service area, wherein the multicast/broadcast service session is configured per multicast/broadcast service area; and configure one or more access nodes to broadcast an indication of an activity status of the multicast/broadcast service session, wherein the one or more access nodes are selected as being all the access nodes serving the indicated service area.

The at least one memory and at least one processor may be configured to cause the apparatus to: receive a service request, wherein the service request comprises an indication that the service request is for receiving multicast data; and decide whether to accept the service request or to reject the service request based on the received indication and a condition of the apparatus.

According to an aspect, there is provided a method comprising: broadcasting, in a first cell, an indication of an activity status of a multicast/broadcast service session, wherein the activity status of the multicast/broadcast service session is determined per multicast/broadcast service area, and wherein the indication is broadcast in one or more cells including the first cell associated with the service area.

The method may comprise: broadcasting a multicast/broadcast service identifier or a multicast/broadcast frequency selection area identifier together with the indication of the activity status of the multicast/broadcast service session

The indication of the activity status of a multicast/broadcast service session may be one of: an identifier of the multicast/broadcast session which is periodically broadcasted while the multicast/broadcast service session is active in the multicast/broadcast service area; or a paging message for the multicast/broadcast session which is periodically broadcasted while the multicast/broadcast service session is active in the multicast/broadcast service area.

The method may comprise broadcasting the activity status of a multicast/broadcast service session in all cells served by the apparatus that belong to at least one service area of the multicast/broadcast session.

The method may comprise: sending, in the first cell data, of the multicast/broadcast service for the service area to which the first cell belongs while the multicast/broadcast service is active in the service area; and determining that at least one user equipment that wants to receive the multicast/broadcast session is located in the first cell.

The method may comprise: receiving an indication that at least one user equipment has joined the multicast/broadcast service session; receiving, from a user equipment that joined the multicast session, a request for transiting to RRC-Connected state from an inactive or idle state in response to the broadcasted information; and determining, based on the request, that a user equipment wanting to receive multicast/broadcast session is located in the first cell.

The request for transiting to RRC-Connected state may comprise an indication that the request is for receiving multicast data, wherein the determining is based on the indication that the request is for receiving multicast data.

The method may comprise: receiving a preamble for the multicast session in response to broadcasted information; and determining, based on the preamble, that at least one user equipment in the cell wants to receive the multicast/broadcast service session traffic.

Determining whether the multicast/broadcast service session is active in a service area with which the first cell is associated may comprise receiving one or more of: a group paging message for the multicast/broadcast session with a corresponding service area; a multicast/broadcast session activation request for the multicast/broadcast session with a corresponding service area; an XnAP RAN Multicast Group paging request for the multicast session with a corresponding service area; a distribution setup response message for the multicast/broadcast session with a corresponding service area; and a next generation application protocol protocol data unit session resource setup or modify request requesting to establish resources for the multicast/broadcast session with a corresponding service area.

The method may comprise: sending, to a multicast broadcast session management function and in response to the determining that at least one user equipment that wants to receive the multicast/broadcast session is located in the cell, a request for establishment of multicast multicast/broadcast service session traffic delivery to the apparatus.

The method may comprise: determining whether a user equipment that joined a multicast/broadcast session with multiple service areas is capable of receiving the indication of an activity status of a multicast/broadcast service session; and when determining that the user equipment is not capable of receiving the indication, keeping the user equipment in RRC-connected state while the multicast/broadcast session exists.

According to an aspect, there is provided a method comprising: receiving, from an access node associated with a first cell, an indication of an activity status of a multicast/broadcast service session in the first cell, wherein the indication is broadcast in one or more cells including the first cell; determining whether the multicast/broadcast service session is active in the first cell based on the indication; and in response to determining that the multicast/broadcast service session is active in the first cell, starting to receive data for the multicast session in the first cell.

The method may comprise: receiving a multicast/broadcast service identifier or a multicast/broadcast frequency selection area identifier and the indication of the activity status of the multicast/broadcast service session.

The indication of the activity status of a multicast/broadcast service session may comprise one of: an identifier of the multicast/broadcast session which is periodically broadcasted while the multicast/broadcast service session is active in the multicast/broadcast service area; or a paging message for the multicast/broadcast session which is periodically broadcasted while the multicast/broadcast service session is active in the multicast/broadcast service area.

The method may comprise: sending a request to transition to RRC-active state and a service request in response to being in RRC_inactive or RRC_idle state and determining that the multicast/broadcast service session is active.

The service request may comprise an indication that it is for receiving multicast data.

The request to transition to RRC-active state may comprise an indication that the request is for receiving multicast data.

The method may comprise: sending a preamble for the multicast session in response to being in RRC_inactive state; and determining that the multicast/broadcast service session is active.

The method may comprise: sending a request to transition to RRC-active state and a service request in response to being in RRC_inactive or RRC_idle state; camping in a cell within the service area of the multicast/broadcast session; and not receiving the indication of the activity status of a multicast/broadcast service session in that cell for a configured period.

The method may be performed by a user equipment moving to the first cell from a second cell, wherein the second cell may be one of: a cell that is not part of a service area of the multicast/broadcast session; or a cell that is part of a service area of a multicast/broadcast session and where the multicast/broadcast session is inactive.

According to an aspect, there is provided a method comprising: receiving, from a multicast/broadcast session management function, information indicating that a multicast/broadcast service session is active in one service area, wherein the multicast/broadcast service session is configured per multicast/broadcast service area; and configuring one or more access nodes to broadcast an indication of an activity status of the multicast/broadcast service session.

The one or more access nodes may be selected as at least one of: being all the access nodes serving the service area; or as all access nodes having an established shared N3 tunnel for the multicast/broadcast session.

The method may comprise: receiving a service request, wherein the service request comprises an indication that the service request is for receiving multicast data; and deciding whether to accept the service request or to reject the service request based on the received indication and a condition of the apparatus.

According to an aspect, there is provided a computer readable medium comprising program instructions for causing an apparatus to perform at least the following: broadcasting, in a first cell, an indication of an activity status of a multicast/broadcast service session, wherein the activity status of the multicast/broadcast service session is determined per multicast/broadcast service area, and wherein the indication is broadcast in one or more cells including the first cell associated with the service area.

According to an aspect, there is provided a computer readable medium comprising program instructions for causing an apparatus to perform at least the following: receiving, from an access node associated with a first cell, an indication of an activity status of a multicast/broadcast service session in the first cell, wherein the indication is broadcast in one or more cells including the first cell; determining whether the multicast/broadcast service session is active in the first cell based on the indication; and in response to determining that the multicast/broadcast service session is active in the first cell, if not yet receiving data for the multicast session in the first cell, starting to receive data for the multicast session in the first cell.

According to an aspect, there is provided a computer readable medium comprising program instructions for causing an apparatus to perform at least the following: receiving, from a multicast/broadcast session management function, information indicating that a multicast/broadcast service session is active in one service area, wherein the multicast/broadcast service session is configured per multicast/broadcast service area; and configuring one or more access nodes to broadcast an indication of an activity status of the multicast/broadcast service session.

The one or more access nodes may be selected as at least one of: being all the access nodes serving the service area; or as all access nodes having an established shared N3 tunnel for the multicast/broadcast session.

According to an aspect, there is provided a non-transitory computer readable medium comprising program instructions for causing an apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of a network system according to some example embodiments;
Figure 2 shows a representation of a control apparatus according to some example embodiments;
Figure 3 shows a representation of an apparatus according to some example embodiments;
Figure 4 shows a call flow according to some examples;
Figure 5 shows methods according to some examples;
Figure 6 shows a call flow according to some examples.

### DETAILED DESCRIPTION

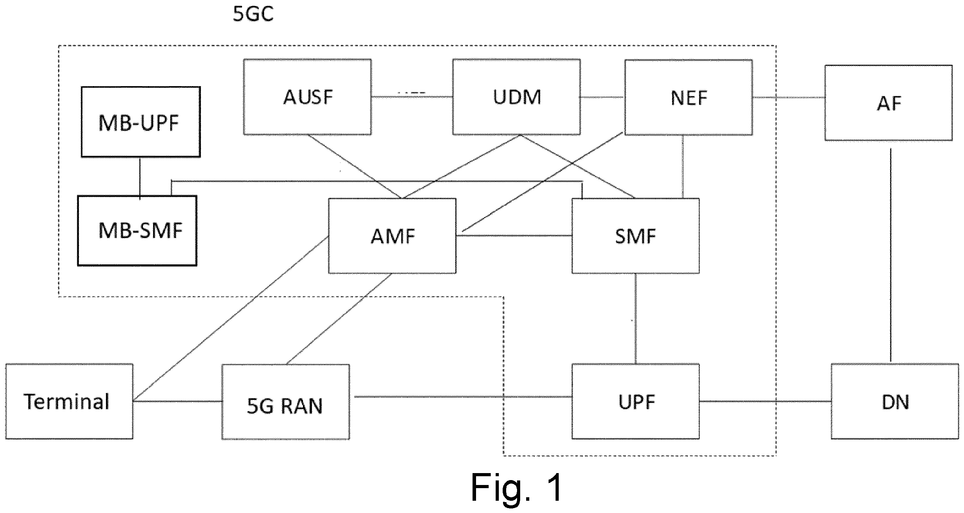

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may be comprised by a terminal or user equipment (UE), a 5G radio access network (5GRAN) or next generation radio access network (NG-RAN), a 5G core network (5GC), one or more application function (AF) and one or more data networks (DN).

The 5G-RAN may comprise one or more gNodeB (GNB) or one or more gNodeB (GNB) distributed unit functions connected to one or more gNodeB (GNB) centralized unit functions. The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); Session Management Function (SMF); User Plane Function (UPF); Multicast/Broadcast Session Management Function (MB-SMF); and Multicast/Broadcast User Plane Function (MB-UPF).

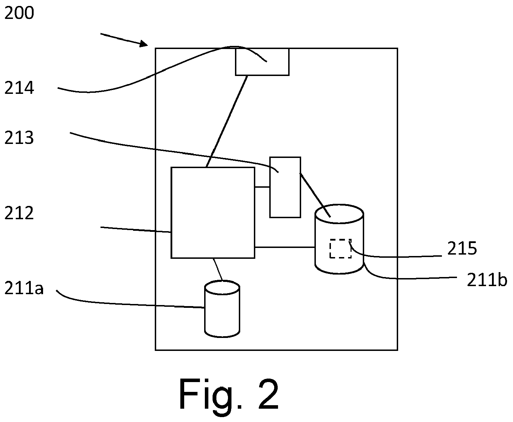

Figure 2 illustrates an example of a control apparatus 200 for controlling a function of the 5GRAN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5GRAN or the 5GC. In some embodiments, each function of the 5GRAN or the 5GC comprises a control apparatus 200. In alternative embodiments, two or more functions of the 5GRAN or the 5GC may share a control apparatus.

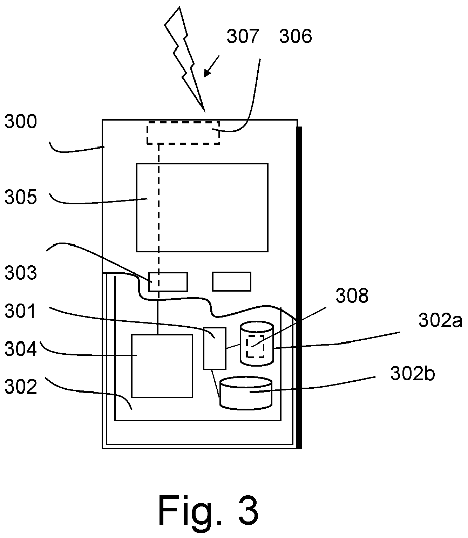

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (loT) type communication device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

3GPP Rel-17 introduces the support of Multicast/Broadcast Service (MBS) sessions in 5GS. MBS is a point-to-multipoint service in which data is transmitted from a single source entity to multiple recipients, either to all users in a broadcast service area, or to users in a multicast group.

In some examples, an MBS session may be location dependent. A location dependent MBS session is an MBS session with location dependent content, i.e. different content may be distributed per MBS service area of the MBS session.

A multicast MBS session can be activated /deactivated upon AF instructions or upon detection of MBS data being received / no longer received.

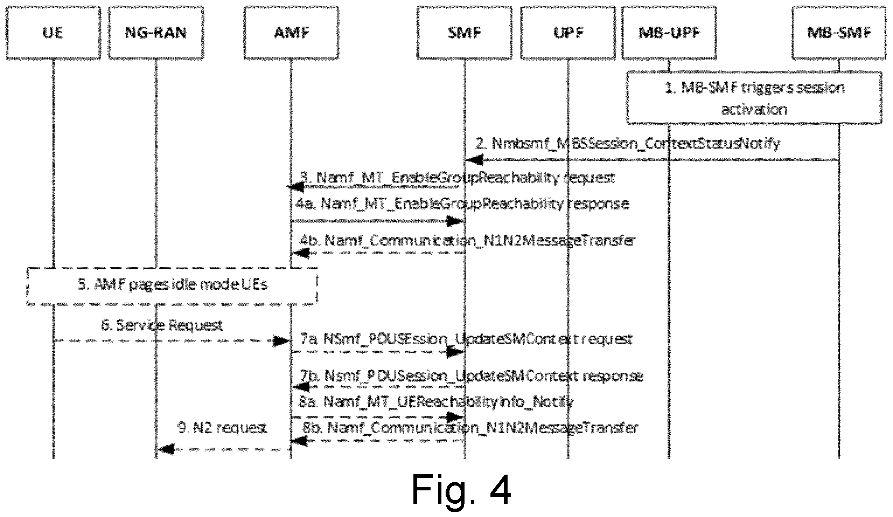

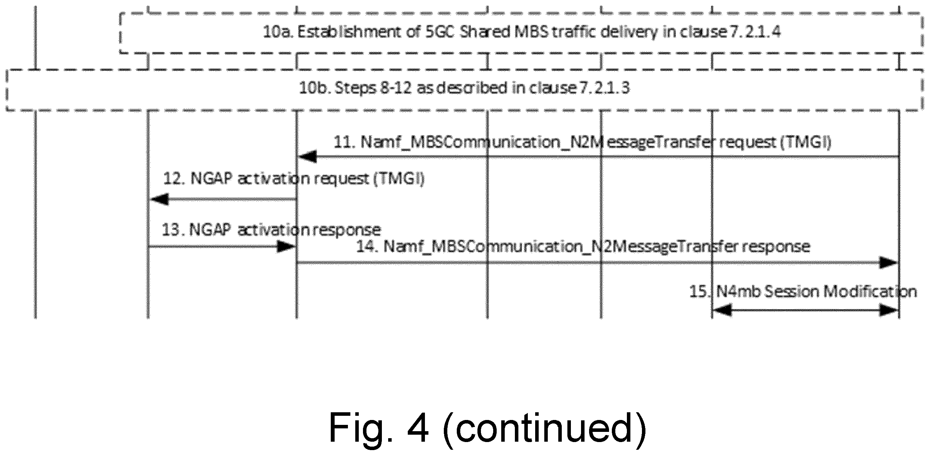

Figure 4 shows an example call flow of an MBS session activation procedure as defined in 3GPP TS 23.247.

In step 1, the MB-SMF triggers an MBS session activation. The procedure may be triggered by the following events:
- When the MB-UPF receives downlink data for a multicast MBS session, based on the instruction from the MB-SMF (as described in clause 7.2.5.3 of 3GPP TS 23.247), the MB-UPF sends N4mb Notification (N4 Session ID) to the MB-SMF for indicating the arrival of DL MBS data;
- The AF sends MBS Activation request (TMGI) to the MB-SMF directly or via NEF.

In step 2, the MB-SMF sends Nmbsmf_MBSSession_ContextStatusNotify (MBS Session ID, multicast session activated) to SMF(s).

The SMF sets the related multicast MBS session state as "Active" state and finds out the list of UEs that joined the multicast MBS session identified by the related TMGI. If the SMF determines the user plane of the associated PDU session(s) of the UE(s) with respect to the TMGI are activated already, steps 3-8a will be skipped for those UE(s).

In step 3, the SMF invokes Namf_MT_EnableGroupReachability Request (List of UEs, [PDU Session ID of the associated PDU Sessions], TMGI, [UE reachability Notification Address], [ most demanding ARP, 5QI of all MBS QoS Flow within MBS session])) to AMF(s). When later UE is reachable, the UE reachability Notification Address is used by the AMF to identify and notify the related SMF.

After receiving the request, for each UE in the list, the AMF determines CM state of the UE as shown in steps 4 - 7.

In step 4a, if there are UEs involved in the multicast MBS Session and in CM-CONNECTED state, the AMF indicates those UEs to the SMF, using Namf_MT_EnableGroupReachability Response (UE list). Otherwise, the response does not include UE list.

In step 4b, for each UE in the UE list included in step 4a, if the QoS profile(s) for associated QoS flow(s) has not yet been provided for the PDU session, the SMF invokes Namf_Communication_N1N2MessageTransfer (N2 SM information (PDU Session ID, MBS Session ID, [QoS profile(s) for associated QoS flow(s)], [mapping information between the unicast QoS flow and multicast QoS flow])) to the AMF for the UE which is identified in step 4a.

The associated QoS profiles as well as the mapping information between the unicast QoS flow and multicast QoS flow are included to support the 5GC Individual MBS traffic delivery.

The procedure continues at step 9.

Optionally, at step 5, if AMF determines that there are UEs in CM-IDLE state and involved in the multicast MBS Session, the AMF figures out the paging area covering all the registration areas of those UE(s), which need to be paged. The AMF may apply paging differentiation as specified in clause 6.12 of 3GPP TS 23.247. The AMF sends a paging request message to the NG-RAN node(s) belonging to this Paging Area with the TMGI as the identifier to be paged if the related NG-RAN node(s) support MBS. If the NG-RAN node(s) do not support MBS, the AMF sends Paging message(s) to the NG-RAN node(s) per UE without using the MBS Session ID as described in step 4b in clause 4.2.3.3 of TS 23.502.

In addition to the paging in clause 6.12, other paging strategies may be applied, depending on AMF implementation.

In step 6b, the UE(s) in CM-IDLE state sends Service Request message to the AMF, see clause 4.2.3 of TS 23.502.

In step 7a/7b, after receiving the Service Request sent by the UE(s):
- Either based on the received PDU Session ID in step 3, the AMF identifies the related SMF and invokes Nsmf_PDUSession_UpdateSMContext request. The procedure continues at step 9; or:
- Based on the received UE reachability Notification Address in step 3, the AMF identifies and notifies the related SMF of the UE(s), which are reachable now and its Location Information, by using the Namf_MT_UEReachabilitylnfoNotify message. In this case, it can be a separated notification or combined with step 8.

In step 8a, for UE(s) that do not respond to paging, the AMF informs the SMF of the paging failure in Namf_MT_UEReachabilitylnfoNotify.

In step 8b, for UE(s) that is indicated as reachable via the Namf_MT_UEReachabilitylnfoNotify message, or user plane of the associated PDU session is activated already but the QoS profile(s) for associated QoS flow(s) needs to be provided for the PDU session, the SMF invokes Namf_Communication_N1N2MessageTransfer (N2 SM information ()) to the AMF same as described in step 4b.

In step 9, the AMF sends N2 request message (N2 SM information ()) to the RAN node.

In step 10a, if the shared tunnel has not been established before, the shared tunnel is established at this step, as defined in clause 7.2.1.4 of 3GPP TS 23.247. The NG-RAN configures UE with RRC messages if needed.

In step 10b, steps 8 to 12 defined in clause 7.2.1.3 of 3GPP TS 23.247 are performed.

If 5GC Individual MBS traffic delivery is used, the SMF configures the UPF for individual delivery and if necessary requests the MB-SMF to configure the MB-UPF to send multicast data to the UPF.

In step 11, if the MB-SMF finds out there are shared tunnel established, steps 11-15 are performed.

The MB-SMF invokes Namf_MBSCommunication_N2MessageTransfer Request (TMGI, N2 SM Information (Activation, TMGI)) to the AMF for those NG-RAN nodes, which have shared tunnel with MB-UPF. This step may be performed in parallel with step 2.

The messages in steps 10a, 11 and 12 may be MBS-specific and it is possible that the AMF(s) in steps 10a, 11 and 12 are not associated to any UEs involved in the multicast MBS Session.

In step 12, the AMF sends NGAP activation request message (N2 SM Information ()) to the NG-RAN nodes. For those UEs that have joined in the MBS Session and are in RRC-INACTIVE state, the RAN nodes perform RAN paging as specified in TS 38.300.

In step 13, the NG-RAN nodes responses to AMF by NGAP activation response message. The NG-RAN nodes establish radio resources to transmit multicast MBS session data to the UE(s). The NG-RAN shall not release the radio connection of a UE that has joined into the multicast session only because no unicast traffic is received for the UE.

In step 14, the AMF sends to MB-SMF a Namf_MBSCommunication_N2MessageTransfer Response ().

In step 15, the MB-SMF sends N4mb Session Modification Request to the MB-UPF to forward the receiving packet. The MB-UPF responds to the MB-SMF with N4mb Session Modification Response acknowledging the MB-SMF request.

In some examples, it may be possible to activate a location dependent MBS session in a subset of its MBS service areas, when no traffic would be received for certain MBS service areas. While separate MBS session activation per service area may be desirable from the service perspective, the implementation raises mobility related concerns.

With the scheme described above, the MB-SMF may notify all MBS service areas of the activation when the first activation request for any service area is received. The deactivation may only be possible when deactivation request is received for all service areas.

From a service perspective it may be beneficial to have separate activations per MBS service areas, as there can be several data sources and it may be difficult to coordinate the transmission times.

Activating a location dependent MBS session in all its MBS service areas when traffic is received in a subset of the MBS service areas causes (for MBS service areas without traffic) may result in unnecessary paging and signaling over the radio, in the RAN and the CN to activate the MBS session towards all the UEs which joined the MBS session.

Furthermore, this may result in a waste of radio resources for GBR MBS QoS flows in the RAN nodes due to reserving unnecessary resources in cells where in the end no delivery will happen but also by keeping unnecessarily UEs in connected mode while they have no activity.

In addition, this may result in more UE power consumption due to UEs switching from RRC_IDLE to RRC_CONNECTED with no need, since not all those UEs will have MBS traffic to receive.

If different MB-SMFs are used for an MBS session, the 3GPP Rel-17 specifications do not enable anyway to activate/deactivate the MBS session in all MBS service areas served by all MB-SMFs. Instead, each MB-SMF (de)activates the MBS session independently from other MB-SMFs.

It may be preferable to activate the MBS session only in the MBS service areas with active MBS traffic.

The following technical issues may arise when providing support of MBS session activation per MBS service area:
- UE mobility from an inactive to an active MBS service area - a solution is needed to enable delivering MBS data to idle mode UEs moving to an MBS service area with active transmission;
- UE mobility from an active to an inactive MBS service area - delivery of multicast data shall be stopped towards the UE entering the inactive MBS service area;
- Paging is defined in 3GPP Rel-17 for an MBS session, not for a location dependent component of it in a service area, and UEs are unaware of the MBS service areas - some adjustments to existing procedures may be required to support activating an MBS session only towards UEs located in a specific MBS service area.

Some examples of the present disclosure may address one or more of the technical issues described above.

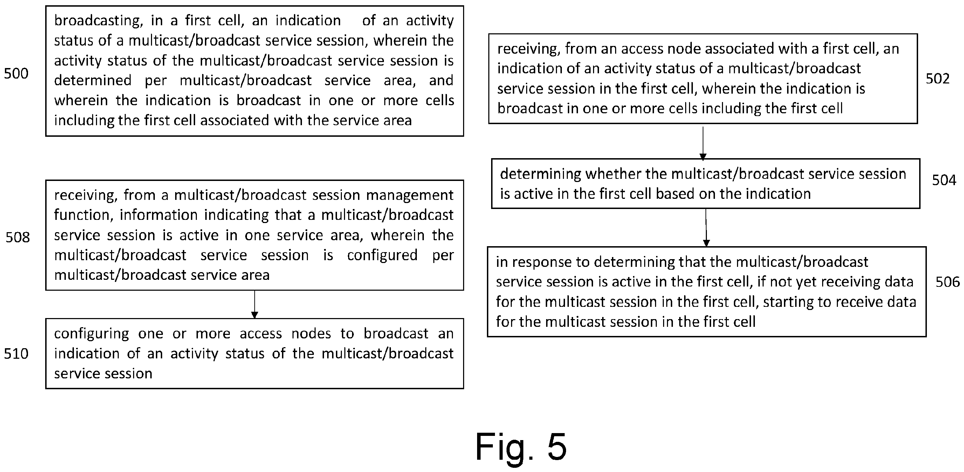

Reference is made to Figure 5, which shows methods according to some examples.

At step 500, a method comprises broadcasting, in a first cell, an indication of an activity status of a multicast/broadcast service session, wherein the activity status of the multicast/broadcast service session is determined per multicast/broadcast service area, and wherein the indication is broadcast in one or more cells including the first cell associated with the service area.

At step 502, a method comprises receiving, from an access node associated with a first cell, an indication of an activity status of a multicast/broadcast service session in the first cell, wherein the indication is broadcast in one or more cells including the first cell.

At step 504, the method comprises determining whether the multicast/broadcast service session is active in the first cell based on the indication.

At step 506, the method comprises, in response to determining that the multicast/broadcast service session is active in the first cell, if not yet receiving data for the multicast session in the first cell, starting to receive data for the multicast session in the first cell.

At step 508, a method comprises receiving, from a multicast/broadcast session management function, information indicating that a multicast/broadcast service session is active in one service area, wherein the multicast/broadcast service session is configured per multicast/broadcast service area.

At step 510, the method comprises configuring one or more access nodes to broadcast an indication of an activity status of the multicast/broadcast service session.

In some examples, the one or more access nodes may be selected as being all the access nodes servicing the indicated service area, and/or selected as all access nodes having an earlier established shared traffic delivery (e.g. N3 tunnel) with the multicast/broadcast session management function.

In some examples, the access node (such as an NG-RAN) may broadcast over the radio an indicator of activity status for the MBS session (i.e. session active/inactive) in cells belonging to a list of service areas of a location dependent MBS Session. For example, the indicator may be included in session information block, SIB. In some examples, the indicator may be broadcast together with the MBS Frequency Selection Area identifiers (MBS FAS IDs).

In some examples, the multicast/broadcast session may be activated per multicast/broadcast service area. In some examples, the indicator may be set in cells belonging to one of a list of service areas of a location dependent MBS Session. In some examples, only the cells within a service area matching an MBS FSA ID applicable for the multicast session are considered. In further examples, only cells where UEs within the MBS session are camping are considered. In some examples, the indication is an MBS session ID that is only sent when the MBS session is active.

The access node may broadcast that an MBS session is active when it delivers multicast traffic in the cell. Additionally or alternatively, the access node may broadcast that an MBS session is active when it has learned from the 5GC that the MBS session is active in the MBS service area. This may be used when there are no UEs in the cell or MBS service area the access node is serving having joined the MBS session or requested to receive the multicast MBS session traffic.

This may enable a UE that moves from an inactive to an active MBS service area to determine, by reading the above indicator broadcast in the cell it enters, that the MBS session is active in the new cell.

Accordingly, the UE may initiate signaling (e.g. Service Request) towards the 5GS to request receiving the multicast MBS session traffic; and subsequently the UE may enter in RRC CONNECTED mode. The 5GC may then request the RAN node to establish radio resources for the multicast QoS flows.

In some examples, a new value for the "Service type" IE may be introduced for the Service Request message and may be used by the UE-NAS. In some examples, the UE-NAS may indicate a new "RRC Establishment causes" to the UE-AS/RRC for sending the Service Request message.

In other examples, if the UE supports reception of multicast traffic in RRC INACTIVE state, the UE may send signaling (e.g. preamble) to the RAN node to indicate its willingness to receive the multicast traffic.

When broadcasting the indication that an MBS session is active, but without delivering the multicast traffic yet in the cell or MBS service area, the access node may request the establishment of shared MBS traffic delivery towards the MB-SMF (via the AMF) when either of the above examples occur and starts delivering the multicast traffic over the radio.

The access node may learn that an MBS session is active in (cells of) an MBS service area by receiving one or more of the following:
- a group paging message with a corresponding service area;
- a Multicast Session Activation Request with a corresponding service area;
- a Distribution Setup Response message with a corresponding service area; and
- an NGAP PDU session request /modify with a corresponding service area.

In some examples, the AMF may distribute a Multicast Session Activation Request message towards all access nodes of all active MBS service areas of the MBS session, instead of only to those that have earlier triggered the establishment of shared MBS traffic delivery (as per 3GPP Rel-17). This may enable all access nodes to know that the MBS session is active, and broadcast an activity status indicator accordingly, regardless of whether some UEs have joined in the MBS service area.

3GPP Rel-17 compliant UEs may not listen to the indicator of activity status for the MBS session (i.e. session active/inactive). In some examples, the access nodes handling 3GPP Rel-17 compliant UEs within a location-dependent MBS session may not allow those UEs to transition to RRC-inactive or RRC-Idle state to guarantee that those UEs are always prepared to receive data from the MBS session. In other examples, the AMF may restrict the registration area to the MBS service area where the UE is currently located.

For example, the AMF may restrict the registration area to the MBS service area where the UE is currently located. Accordingly, when moving out of the MBS service area, the UE may perform a Mobility Registration Update through NAS layer. The AMF may notify the SMF about the new UE location. The SMF may then activate the MBS session for the UE when it moves from an inactive to an active MBS service area. This may be performed only for UEs with subscription to use multicast MBS services

3GPP Rel-17 compliant access nodes may not transmit the indicator of activity status for the MBS session (i.e. session active/inactive). In some examples, a UE that joined an MBS session initiates signaling towards the 5GS to request to transition to RRC-CONNECTED state when camping within the service area of the MBS session and not receiving a broadcasted indicator of activity status for the MBS session in a cell.

In some examples, the access node may repeat the radio paging periodically in MBS service areas where the MBS session is active. This may be triggered under the control of the 5GC (e.g. new info in NGAP Multicast Session Activation Request).

In some examples, a new NAS procedure may be defined for enabling the 5GC to instruct a UE in idle mode to report when it moves out of/into a certain area (TAIs, cells).

The SMF may set this "area" to the TAIs/cells of the current MBS service area where the UE is located. When leaving this MBS service area (i.e. corresponding TAIs, cells), the UE may send a NAS EVENT NOTIFICATION. The access node may add the ULI (User Location Information) IE to the UL NAS message. This may allow the SMF to learn that the UE moves from an inactive to an active MBS service area. The SMF may activate the MBS session for the UE and also updates the UE with the new "area" information.

Alternatively, instead of introducing a new NAS procedure, in some examples an existing NAS procedure can be reused for that purpose (for example, Service Request procedure) after adapting the signalling message by adding new IEs/parameters that serve the needed purpose.

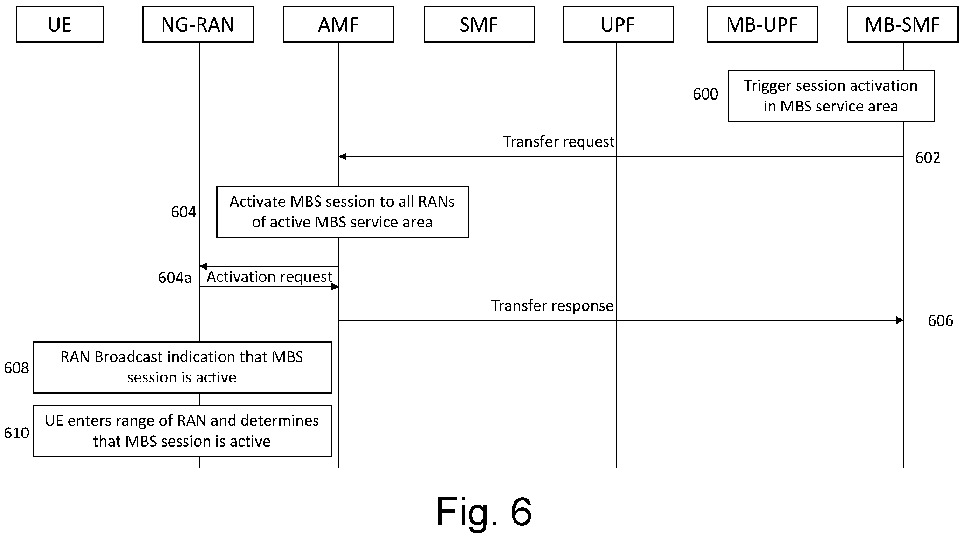

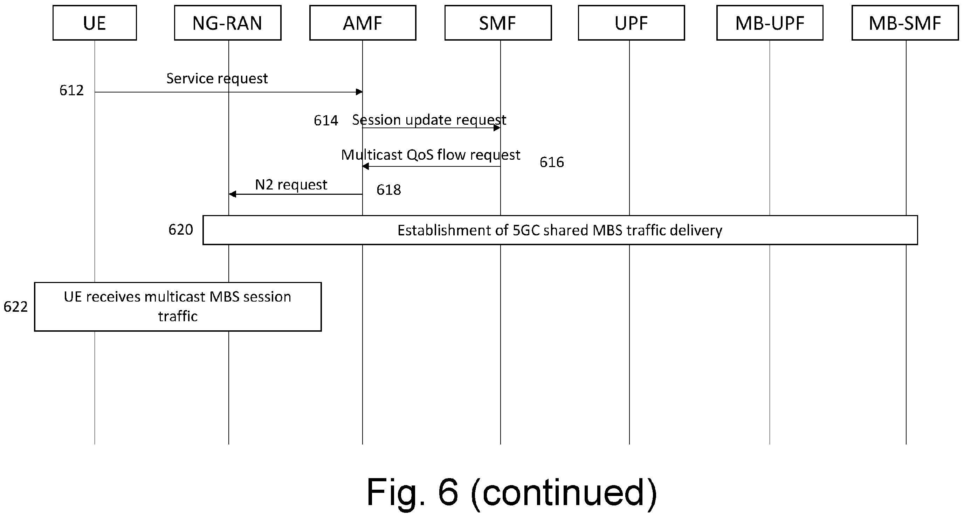

Reference is made to Figure 6, which shows a call flow according to some examples. It should be understood that the steps described below may be combined with one or more of the features described previously.

At step 600, the MB-SMF triggers an MBS session activation in a specific MBS service area. The procedure may be triggered as described previously in relation to step 1 of Figure 4, but limited to the specific MBS service area.

At step 602, the MB-SMF sends a message to the AMF. The message may comprise a transfer request, such as an Namf_MBSCommunication_N2MessageTransfer request. The transfer request may comprise information indicating a temporary mobile group identity (TMGI) and requesting to activate the MBS session in the specific MBS service area.

At step 604, the AMF activates an MBS session to all access nodes of the MBS service area indicated by the transfer request. For example, as shown in step 604a, the AMF may send an NGAP activation request to the RAN(s) of the MBS service area. The request may include the TMGI.

At step 606, the AMF sends a response to the MB-SMF. The response may comprise an Namf_MBSCommunication_N2MessageTransfer response.

At step 608, the access node broadcasts information indicating that an MBS session is active. This may or may not include the access node sending multicast traffic.

At step 610, the UE enters the MBS service area served by the access node and determines that an MBS session is active based on the broadcast information.

At step 612, the UE sends a service request to the AMF (via the access node) for receiving multicast traffic. The request may be sent in response to determining that the MBS session is active in step 610.

At step 614, the AMF sends a session update request to the SMF. For example, the AMF may send an MSmf_PDUSession_UpdateSMContext request.

In response, at step 616, the SMF sends, to the AMF, a request for establishment of multicast QoS flows for the UE.

At step 618, the AMF sends an N2 request to the access node. The N2 request may be based on the request received by the AMF at step 616.

At step 620, the network establishes a shared tunnel for shared MBS delivery, as described previously in step 10a of Figure 4, if none is established yet.

At step 622, the access node sends the multicast MBS session traffic to the UE.

In some examples, the access node may not allocate resources for the multicast MBS session to the UE in an inactive MBS service area, i.e. the principle that no resources are allocated for an inactive MBS session may apply per MBS service area of a location dependent MBS session. This is in contrast to some methods where resources for a multicast MBS session are allocated in all MBS service areas, and not per service area.

In some examples, if the RAN does not support MBS, the SMF may delete the associated QoS flow after the handover. In some examples, the SMF may delete the associated QoS flow when detecting mobility of the UE from an active to an inactive MBS service area. The SMF may subscribe to the AMF to be notified about UE moving across MBS service areas, and use the information received from the AMF to detect the UE mobility.

Therefore, some examples may provide mechanisms for activating or deactivating an MBS session for one or more UEs per MBS service area. Some examples may allow a UE to determine whether an MBS session is active when the UE moves into a new service area, and receive multicast MBS traffic from the network. Some examples may allow the determination of UE mobility between service areas, and establish or cancel multicast QoS flows of the MBS sessions accordingly.

As such, some examples may provide mechanisms where network resources are more efficiently allocated, as the MBS session may be activated and deactivated per MBS service area, based on whether MBS traffic is being received / needs to be delivered in a given MBS service area, and/or based on UE mobility.

In some examples, there is provided an apparatus comprising means for broadcasting, in a first cell, an indication of an activity status of a multicast/broadcast service session, wherein the activity status of the multicast/broadcast service session is determined per multicast/broadcast service area, and wherein the indication is broadcast in one or more cells including the first cell associated with the service area.

In some examples, the apparatus may comprise at least one processor and at least one memory including a computer program code, the at least one memory and computer program code configured to, with the at least one processor, cause the apparatus at least to: broadcast, in a first cell, an indication of an activity status of a multicast/broadcast service session, wherein the activity status of the multicast/broadcast service session is determined per multicast/broadcast service area, and wherein the indication is broadcast in one or more cells including the first cell associated with the service area

In some examples, there is provided an apparatus comprising means for: receiving, from an access node associated with a first cell, an indication of an activity status of a multicast/broadcast service session in the first cell, wherein the indication is broadcast in one or more cells including the first cell; determining whether the multicast/broadcast service session is active in the first cell based on the indication; and in response to determining that the multicast/broadcast service session is active in the first cell, if not yet receiving data for the multicast session in the first cell, starting to receive data for the multicast session in the first cell.

In some examples, the apparatus may comprise at least one processor and at least one memory including a computer program code, the at least one memory and computer program code configured to, with the at least one processor, cause the apparatus at least to: receive, from an access node associated with a first cell, an indication of an activity status of a multicast/broadcast service session in the first cell, wherein the indication is broadcast in one or more cells including the first cell; determine whether the multicast/broadcast service session is active in the first cell based on the indication; and in response to determining that the multicast/broadcast service session is active in the first cell, if not yet receiving data for the multicast session in the first cell, start to receive data for the multicast session in the first cell.

In some examples, there is provided an apparatus comprising means for: receiving, from a multicast/broadcast session management function, information indicating that a multicast/broadcast service session is active in one service area, wherein the multicast/broadcast service session is configured per multicast/broadcast service area; and configuring one or more access nodes to broadcast an indication of an activity status of the multicast/broadcast service session, wherein the one or more access nodes are selected as being all the access nodes serving the indicated service area.

In some examples, the apparatus may comprise at least one processor and at least one memory including a computer program code, the at least one memory and computer program code configured to, with the at least one processor, cause the apparatus at least to: receive, from a multicast/broadcast session management function, information indicating that a multicast/broadcast service session is active in one service area, wherein the multicast/broadcast service session is configured per multicast/broadcast service area; and configure one or more access nodes to broadcast an indication of an activity status of the multicast/broadcast service session, wherein the one or more access nodes are selected as being all the access nodes serving the indicated service area.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising means for:
broadcasting, in a first cell, an indication of an activity status of a multicast/broadcast service session, wherein the activity status of the multicast/broadcast service session is determined per multicast/broadcast service area, and wherein the indication is broadcast in one or more cells including the first cell associated with the service area.

2. The apparatus according to claim 1, further comprising means for broadcasting the activity status of a multicast/broadcast service session in all cells served by the apparatus that belong to at least one service area of the multicast/broadcast session.

3. The apparatus of any preceding claim, further comprising means for:
sending, in the first cell, data, of the multicast/broadcast service for the service area to which the first cell belongs while the multicast/broadcast service is active in the service area; and
determining that at least one user equipment that wants to receive the multicast/broadcast session is located in the first cell.

4. The apparatus according to claim 3, further comprising means for:
receiving an indication that at least one user equipment has joined the multicast/broadcast service session;
receiving, from a user equipment that joined the multicast session, a request for transiting to RRC-Connected state from an inactive or idle state in response to the broadcasted information; and
determining, based on the request, that a user equipment wanting to receive multicast/broadcast session is located in the first cell.

5. The apparatus according to claim 4, wherein the request for transiting to RRC-Connected state comprises an indication that the request is for receiving multicast data, wherein the determining is based on the indication that the request is for receiving multicast data.

6. The apparatus according to claim 3, further comprising means for:
receiving a preamble for the multicast session in response to broadcasted information; and
determining, based on the preamble, that at least one user equipment in the cell wants to receive the multicast/broadcast service session traffic.

7. The apparatus of claim 1, wherein determining whether the multicast/broadcast service session is active in a service area with which the first cell is associated comprises receiving one or more of:
a group paging message for the multicast/broadcast session with a corresponding service area;
a multicast/broadcast session activation request for the multicast/broadcast session with a corresponding service area;
an XnAP RAN Multicast Group paging request for the multicast session with a corresponding service area; and
a distribution setup response message for the multicast/broadcast session with a corresponding service area; and
a next generation application protocol protocol data unit session resource setup or modify request requesting to establish resources for the multicast/broadcast session with a corresponding service area.

8. The apparatus of any preceding claim, further comprising means for:
sending, to a multicast broadcast session management function and in response to the determining that at least one user equipment that wants to receive the multicast/broadcast session is located in the cell, a request for establishment of multicast multicast/broadcast service session traffic delivery to the apparatus.

9. The apparatus of any preceding claim, further comprising means for:
determining whether a user equipment that joined a multicast/broadcast session with multiple service areas is capable of receiving the indication of an activity status of a multicast/broadcast service session; and
when determining that the user equipment is not capable of receiving the indication, keeping the user equipment in RRC-connected state while the multicast/broadcast session exists.

10. An apparatus comprising means for:
receiving, from an access node associated with a first cell, an indication of an activity status of a multicast/broadcast service session in the first cell, wherein the indication is broadcast in one or more cells including the first cell;
determining whether the multicast/broadcast service session is active in the first cell based on the indication; and
in response to determining that the multicast/broadcast service session is active in the first cell, if not yet receiving data for the multicast session in the first cell, starting to receive data for the multicast session in the first cell.

11. The apparatus of claim 10, wherein the means is further for:
sending a request to transition to RRC-active state and a service request in response to being in RRC_inactive or RRC_idle state and determining that the multicast/broadcast service session is active.

12. The apparatus of any of claims 10 to 11, wherein the means is further for:
sending a request to transition to RRC-active state and a service request in response to being in RRC_inactive or RRC_idle state;
camping in a cell within the service area of the multicast/broadcast session; and
not receiving the indication of the activity status of a multicast/broadcast service session in that cell for a configured period.

13. An apparatus comprising means for:
receiving, from a multicast/broadcast session management function, information indicating that a multicast/broadcast service session is active in one service area, wherein the multicast/broadcast service session is configured per multicast/broadcast service area; and
configuring one or more access nodes to broadcast an indication of an activity status of the multicast/broadcast service session.

14. An apparatus according to claim 13 wherein the one or more access nodes are selected as at least one of:
being all the access nodes serving the service area; or
as having an established shared N3 tunnel for the multicast/broadcast session.

15. The apparatus of claim 13, further comprising means for:
receiving a service request, wherein the service request comprises an indication that the service request is for receiving multicast data; and
deciding whether to accept the service request or to reject the service request based on the received indication and a condition of the apparatus.
